# FASCICULE DE BREVET EUROPEEN

(11) **EP 3 986 772 B1**
(45) Date de publication et mention de la délivrance du brevet: **28.05.2025**
(21) Numéro de dépôt: 20742337.7
(22) Date de dépôt: 15.06.2020
(51) Int. Cl.: B62D 25/16, B60R 21/34

(54) **AILE DE VEHICULE AVEC ZONE FUSIBLE POUR DEFORMATION PROGRAMMEE**
FAHRZEUGFLÜGEL MIT SCHMELZBAREM BEREICH FÜR PROGRAMMIERTE VERFORMUNG
VEHICLE WING WITH FUSIBLE REGION FOR PROGRAMMED DEFORMATION

(30) Priorité: 21.06.2019 FR 1906746
(43) Date de publication de la demande: 27.04.2022
(73) Titulaire: Stellantis Auto SAS, 78300 Poissy (FR)
(72) Inventeur: LEMAITRE, Eric, 25250 BEUTAL (FR); PRACHT, Cyril, 25400 EXINCOURT (FR)
(74) Mandataire: BCIP
(86) Numéro de dépôt international: PCT/FR2020/051019
(87) Numéro de publication internationale: WO 2020/254747

(56) Documents cités:
- EP-A2- 1 106 448
- EP-A2- 1 258 417
- EP-A2- 1 690 753
- EP-A2- 1 733 933
- EP-A2- 1 892 162
- EP-B1- 1 484 235
- DE-A1- 102005 031 843
- DE-U1- 202015 104 322
- JP-A- 2000 108 841
- JP-A- 2011 230 572
- JP-A- H11 222 154
- US-A1- 2003 015 890
- US-A1- 2006 125 289
- US-A1- 2010 314 518
- US-A1- 2011 037 293

## Description

L'invention se situe dans le domaine de la gestion des chocs avant impliquant des véhicules automobiles et les moyens de sécurité passive pouvant être mis en œuvre dans la gestion de tels chocs. En particulier, l'invention concerne les véhicules automobiles adaptés à la gestion des chocs frontaux à faible vitesse, de type « choc réparabilité ». L'invention concerne également les ailes de tels véhicules.

Les règlementations actuelles obligent les constructeurs de véhicules automobiles à respecter certaines contraintes au niveau de la sécurité et à réaliser des tests afin d'obtenir l'homologation nécessaire à toute commercialisation. Ainsi, la face avant d'un véhicule doit satisfaire simultanément plusieurs protocoles de chocs frontaux, dont le protocole de choc frontal décalé à haute vitesse et le choc frontal à faible vitesse (ou « choc réparabilité avant »). Il est souvent cherché à répondre aux différentes exigences par des moyens dits de « sécurité passive » qui ne requièrent aucune action de la part de l'utilisateur du véhicule.

Dans le protocole de « choc réparabilité avant », un véhicule est lancé à 16 km/h sur 40% de sa largeur contre un butoir. C'est le processus de déformation de la face avant du véhicule qui est ainsi testé. L'objectif est de promouvoir des processus de déformation qui minimisent les dégâts occasionnés par absorption de la totalité de l'énergie du choc. Ceci permet d'éviter que d'autres éléments du véhicule (tels que les têtes de brancard et le matériel de refroidissement) soient endommagés par le choc. Il devient alors possible de limiter les coûts de réparation du véhicule et de garder le véhicule roulant après le choc.

Lors d'un tel choc, le projecteur avant (ou optique de phare avant) présent du côté du choc est touché. Le projecteur avant va, de manière habituelle, subir un déplacement en direction de l'arrière du véhicule et entrer en rotation lorsque la barrière montre un angle d'impact, par exemple de 10°. L'aile avant du véhicule, longeant la roue et abritant l'amortisseur, est également susceptible d'être touchée, notamment du fait du déplacement du projecteur vers l'arrière. En effet, dans certaines architectures de véhicule, l'appui du projecteur sur l'aile avant provoque un recul de celle-ci générant un contact avec la portière latérale avant. La mobilité de la portière latérale avant qui est articulée en rotation à la limite arrière de l'aile peut être compromise lorsque l'aile avant est déformée. En d'autres termes, l'ouverture de la portière peut être gênée ou empêchée par un contact avec la tôle déformée de l'aile.

On comprend que ce contact risque d'endommager la portière latérale avant que ce soit lors du choc proprement dit ou après le choc, lors de sa prochaine ouverture. En effet, le contact entre le bord arrière de l'aile et le bord avant de la portière génère, dans le meilleur des cas, un griffage nécessitant une retouche de peinture. Dans d'autres cas plus sérieux, la portière est endommagée, déformée, au moment de son ouverture et il faut la remplacer.

L'endommagement de la portière génère un surcoût en termes de réparation du véhicule et une mauvaise classification dudit véhicule en matière de réparabilité dans les grilles tarifaires de certaines compagnies d'assurance. Une solution reste donc à trouver pour pallier ce problème.

Le document JP H11 222154 divulgue une aile pour véhicule automobile selon le préambule de la revendication 1.

Le document FR3058689 propose un ensemble d'éléments destinés à empêcher une rotation de matière de l'aile vers la portière latérale avant en cas de choc avant à faible vitesse. Dans la solution proposée, un support est agencé entre l'aile, le projecteur et la structure du véhicule. Par ailleurs, une entretoise frangible est disposée entre l'aile et le projecteur. Le support est agencé en liaison glissière avec le corps du projecteur et fixé à l'aile. En cas de choc à l'avant du véhicule, un rapprochement réciproque du corps de projecteur et de l'aile par coulissement selon la glissière et effacement de l'entretoise frangible est favorisé au détriment de ladite rotation de matière de l'aile. Cet ensemble d'éléments permet de préserver la manœuvrabilité de la portière après le choc.

Cette solution est intéressante. Néanmoins, il a été constaté que l'aile pouvait quand même être fortement sollicitée et se déformer en générant un recul et par là un contact entre l'aile et la portière avant.

L'invention a pour objectif d'apporter une réponse à au moins un des problèmes ou inconvénients rencontrés dans l'art antérieur. En particulier, l'invention a pour objectif de proposer une solution pour améliorer la gestion des chocs frontaux à faible vitesse de manière à éviter, ou du moins à limiter, le risque d'un endommagement des portières latérales avant.

A cet effet et selon un premier aspect, l'invention a pour objet une aile pour véhicule automobile selon la revendication 1, ladite aile montrant un bord supérieur et une arche de roue délimitée par un bord tombé, l'aile est remarquable en ce qu'elle comprend au moins une zone fusible agencée au niveau de l'arche de roue et/ou au niveau du bord supérieur dans sa portion disposée à la verticale de l'arche de roue.

Selon une autre définition, l'invention a pour objet une aile pour véhicule automobile, ladite aile montrant un bord supérieur et une arche de roue délimitée par un bord tombé, l'aile est remarquable en ce qu'elle comprend au moins une zone fusible montrant une résistance mécanique réduite par rapport au reste de l'aile, au moins une zone fusible étant agencée au niveau de l'arche de roue et/ou au niveau du bord supérieur dans sa portion disposée à la verticale de l'arche de roue.

Comme on l'aura compris à la lecture de la définition qui vient d'en être donnée, l'invention consiste à favoriser une déformation de l'aile du véhicule au niveau de l'arche de roue en dotant d'une zone fusible ladite arche et/ou le bord supérieur de l'aile disposé à la verticale de ladite arche. Une zone fusible est une zone montrant une résistance mécanique réduite par rapport au reste de l'aile. Ainsi, sous l'application d'une force supérieure à un seuil prédéterminé, l'aile va plier au niveau de la zone fusible au lieu de reculer en direction de la portière. Le contact entre l'aile est la portière est donc évité, ou du moins, le risque de contact est diminué.

Selon un premier mode de réalisation préféré de l'invention, là ou au moins une zone fusible est agencée sur le bord tombé de l'arche de roue. De préférence, là ou au moins une zone fusible comprend au moins une entaille réalisée dans le bord tombé. Plus préférentiellement, ladite entaille montre une forme en U ou en V.

Le bord supérieur montrant également un bord tombé, là ou au moins une zone fusible est agencée sur le bord tombé du bord supérieur de l'aile. De préférence, là ou au moins une zone fusible comprend au moins une entaille réalisée dans le bord tombé. Plus préférentiellement, ladite entaille montre une forme en U ou en V.

Le bord tombé a, entre autres, un rôle de rigidification du bord de l'aile formant l'arche de roue ou du bord supérieur de l'aile selon son emplacement. Par la réalisation d'une entaille sur ledit bord tombé, l'invention favorise l'amorce d'un pliage de l'aile au niveau de ladite entaille. Ce pliage permet à l'aile de moins reculer par rapport à la situation antérieur, voire de ne plus reculer, et donc limite les risques d'endommagement de la portière. L'entaille est réalisée lors de la production de l'aile, et plus particulièrement par une découpe lors des opérations d'emboutissage.

Avantageusement, là ou au moins une zone fusible se comprenant au moins une entaille réalisée dans le bord tombé de l'arche de roue, l'aile est remarquable en ce qu'elle comprend une seule entaille formant une zone fusible sur le bord tombé de l'arche de roue. En effet, il a été trouvé par les inventeurs que les ailes montrant une seule entaille sur le bord tombé de leur arche de roue, montraient de meilleures performances en matière de protection de la portière que les ailes montrant deux entailles ou plus réparties sur le bord tombé formant l'arche de roue.

Idéalement, là ou au moins une zone fusible se comprenant au moins une entaille réalisée dans le bord tombé de l'arche de roue, l'aile est remarquable en ce que là ou au moins une entaille est disposée au point haut de ladite arche de roue. Il a été trouvé par les inventeurs que la disposition de l'entaille au point haut de ladite arche de roue est la disposition dans laquelle la présence d'une entaille sur le bord tombé donne les meilleurs résultats en termes de protection de la portière, par rapport à une aile montrant une entaille sur ledit bord tombé disposé en avant ou en arrière dudit point haut.

Selon un deuxième mode de réalisation alternatif ou complémentaire au premier mode de réalisation, l'aile étant formée par une tôle, l'aile est remarquable en ce que là ou au moins une zone fusible est formée par une bande de tôle montrant une épaisseur réduite par rapport à l'épaisseur du reste de la tôle formant l'aile. Du fait de son épaisseur réduite, la bande de tôle montre une résistance mécanique réduite par rapport à la résistance mécanique montrée par le reste de la tôle formant l'aile.

Selon un troisième mode de réalisation alternatif ou complémentaire au premier et/ou au deuxième mode de réalisation, l'aile étant formée par une tôle, l'aile est remarquable en ce que là ou au moins une zone fusible est formée par une bande de tôle traitée thermiquement de sorte à montrer une résistance mécanique réduite par rapport à la résistance mécanique montrée par le reste de la tôle formant l'aile.

Que la bande de tôle formant une zone fusible montre une épaisseur réduite et/ou ait été traitée thermiquement, l'aile montrant un bord supérieur, l'aile est remarquable en ce que la bande de tôle formant une zone fusible est agencée sur le bord tombé de l'arche de roue ; et/ou s'étend entre le bord supérieur de l'aile et le bord tombé de l'arche de roue selon une direction verticale ou selon une direction montrant un angle avec la verticale égal ou inférieur à 45°.

Idéalement, l'aile montrant un bord supérieur, l'aile est remarquable en ce que la bande de tôle formant une zone fusible s'étend entre le bord supérieur de l'aile et le bord tombé de l'arche de roue et en ce que ladite bande s'étend depuis le point haut de l'arche de roue et/ou en ce que la bande de tôle formant une zone fusible montre en outre une entaille au niveau du bord tombé de l'arche de roue.

Selon un deuxième aspect, l'invention a pour objet un véhicule automobile remarquable en ce qu'il comprend au moins une aile selon le premier aspect ; de préférence, ladite aile est une aile avant.

Selon un troisième aspect, l'invention a pour objet un procédé de fabrication d'une aile selon le premier aspect à partir d'une tôle.

Dans la première variante de réalisation de l'invention selon laquelle l'aile montre au moins une entaille disposée sur son bord tombé, le procédé est remarquable en ce qu'il comprend une étape de découpage d'au moins une entaille dans l'arche de roue suivie de la réalisation d'un bord tombé sur l'arche de roue, ladite ou lesdites entailles étant dimensionnées pour être confinées audit bord tombé.

Dans la deuxième variante de réalisation de l'invention selon laquelle l'aile montre au moins une bande de tôle d'épaisseur réduite, le procédé est remarquable en ce qu'il comprend une étape de laminage flexible de ladite tôle de manière à former au moins une bande montrant une sous-épaisseur ; de préférence, ladite étape de laminage flexible est suivie d'une étape d'emboutissage et de découpage de la tôle de manière à former ladite aile.

Dans la troisième variante de réalisation de l'invention selon laquelle l'aile montre au moins une bande de tôle traitée thermiquement de sorte à montrer une résistance mécanique réduite, ladite tôle étant en acier, le procédé est remarquable ce qu'il comprend une étape de traitement thermique localisé apte à créer une zone douce montrant une résistance mécanique réduite dans laquelle la bande de tôle est chauffée à une température comprise entre les Ac1 et Ac3 de la tôle d'acier; de préférence, ladite étape de traitement thermique est suivie d'une étape d'emboutissage et de découpage de la tôle de manière à former ladite aile.

L'invention sera bien comprise et d'autres aspects et avantages apparaîtront clairement à la lecture de la description qui suit donnée en référence aux planches de dessins annexées sur lesquelles :
[Fig.1] La figure 1 est une vue partielle d'une aile de véhicule automobile telle que vue depuis sa face interne avec en médaillon le détail d'un exemple de réalisation d'une zone fusible sur le bord tombé de l'arche de roue.
[Fig.2] La figure 2 est un graphique montrant les résultats des tests de recul de l'aile avec ou sans zone fusible en cas de choc frontal à faible vitesse.

Dans la description qui suit, le terme « comprendre » est synonyme de « inclure » et n'est pas limitatif en ce qu'il autorise la présence d'autres éléments dans le véhicule ou dans l'aile auquel il se rapporte. Il est entendu que le terme « comprendre » inclut les termes « consister en ». « Inférieure » ou « basse » désignera une proximité au sol plus importante que « supérieure » ou « haute » selon l'axe vertical. Les termes « avant » et « arrière » s'entendront par rapport à l'orientation générale du véhicule. Sur les différentes figures, les mêmes références désignent des éléments identiques ou similaires.

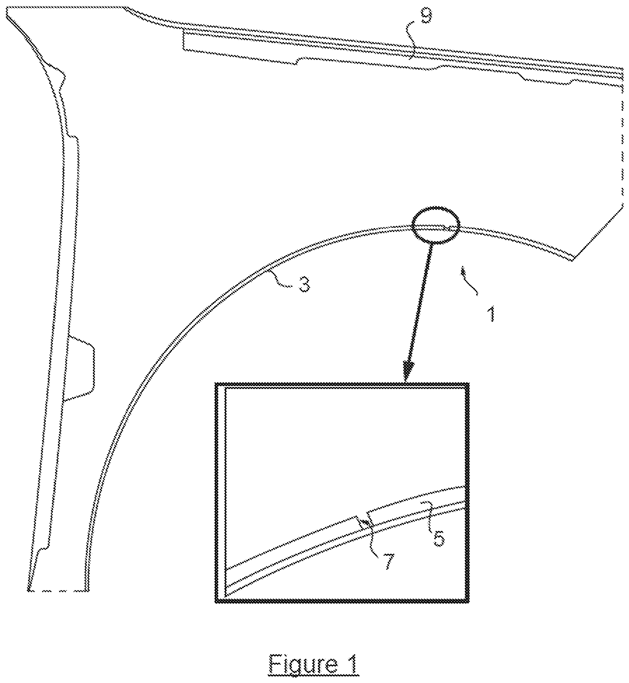

On se réfèrera en premier lieu à la figure 1 montrant partiellement une aile 1 de véhicule automobile tel que vue depuis sa face interne c'est-à-dire tournée vers l'intérieur du véhicule, par opposition à la face externe. Selon l'invention, l'aile présente au moins une zone fusible 7 au niveau de l'arche de roue 3 et/ou au niveau du bord supérieur 9 dans sa portion disposée à la verticale de l'arche de roue 3.

L'aile 1 peut présenter une ou plusieurs zones fusibles 7 ; de préférence, l'aile 1 présente une zone fusible 7 unique.

Cette zone fusible 7 peut se présenter sous différentes formes. Selon un premier mode de réalisation illustré à la figure 1, la zone fusible 7 est disposée sur le bord tombé 5 de l'arche de roue 3 et comprend au moins une entaille réalisée dans ledit bord tombé 5. Les caractéristiques de la zone fusible 7 disposée sur le bord tombé 5 de l'arche de roue 3 sont applicables à une zone fusible disposée sur le bord tombé du bord supérieur 9 de l'aile.

En effet, de manière connue, l'aile 1 comprend une arche de roue 3 bordée par un bord tombé 5. On rappelle au besoin qu'un bord tombé 5 correspond à la bordure d'une pièce en tôle qui est renvoyée à 90° selon une direction d'emboutissage donnée. Dans le cas présent, le bord tombé 5 s'étend du côté de la face interne de l'aile 1. Le bord tombé 5 a classiquement deux fonctions : d'une part, il permet de réduire la gravité des blessures en cas d'impact physique d'un piéton sur le bord de l'arche de roue ; d'autre part, il a pour fonction de renforcer le bord du panneau formant l'aile 1. A ce titre, il contribue à la transmission des efforts reçus par l'aile et à sa rigidité.

L'invention est donc remarquable en ce qu'elle propose une aile 1 de véhicule automobile dans laquelle le bord tombé 5 montre une zone fusible 7 de manière à amorcer un pliage de ladite aile 1 en proposant une zone de résistance mécanique réduite au niveau d'un relief de renforcement de ladite aile 1. La zone fusible 7 comprend au moins une entaille ; de préférence une seule entaille. Ladite entaille est avantageusement réalisée par une opération de découpe lors du procédé de fabrication de l'aile 1 par emboutissage avant la réalisation du bord tombé 5 en lui-même. A cette fin, elle présente avantageusement une forme en V ou en U ; de préférence une forme en V. Au moins une entaille s'étend sur au moins 50% de la largeur du bord tombé 5, de préférence sur au moins 80% de la largeur du bord tombé 5 ; plus préférentiellement sur toute la largeur du bord tombé 5.

Il est possible de réaliser plusieurs entailles réparties sur la longueur du bord tombé 5 de l'arche de roue 3, par exemple deux ou trois entailles. Néanmoins, les tests réalisés ont montré que la configuration avec une entaille unique était la plus efficace. De même, s'il est possible de découper l'entaille ou les entailles en différents emplacements de l'arche de roue, il est préférable de découper une entaille au point haut de ladite arche de roue, c'est-à-dire au point où une tangente à l'arc de cercle formé par l'arche de roue est horizontale. Néanmoins, d'autres emplacements pourront être envisagés par l'homme du métier, en avant ou en arrière dudit point haut. Par exemple, la ou les entailles peuvent être disposées sur un arc de cercle montré de l'arche de roue sous tendant un angle centré sur la verticale et montrant une valeur totale de 60°, soit 30° de part et d'autre de la verticale ; de préférence une valeur totale de 45°.

Selon un deuxième mode de réalisation alternatif ou complémentaire au premier mode de réalisation, là ou au moins une zone fusible est formée par une bande de tôle montrant une épaisseur réduite par rapport à l'épaisseur du reste de la tôle formant l'aile. La réalisation de tôles montrant différentes épaisseurs est connue de l'homme du métier et peut être réalisée par un procédé de laminage flexible. L'emploi de tôles montrant une épaisseur variable ainsi que les procédés de fabrication d'une telle tôle par laminage flexible sont connus de l'homme du métier. Le document KR101825427 décrit un procédé de laminage flexible de la carrosserie d'un ouvrant de véhicule. Un autre exemple est donné par le document EP2044234. L'homme du métier réalisera l'étape de laminage flexible avant les étapes d'emboutissage et de découpage de l'aile.

Lorsque la bande de tôle d'épaisseur réduite est confinée au bord tombé, la réduction d'épaisseur peut être obtenue par usinage.

Selon un troisième mode de réalisation alternatif ou complémentaire au premier et/ou au deuxième mode de réalisation, là ou au moins une zone fusible est formée par une bande de tôle traitée thermiquement de sorte à montrer une résistance mécanique réduite par rapport à la résistance mécanique montrée par le reste de la tôle formant l'aile. De manière connue, un traitement thermique localisé peut permettre la création de zone douces (nommées « soft zones » en anglais) par une modification locale de la microstructure de l'acier depuis une structure de type martensitique jusqu'à une microstructure composée de ferrite ou de perlite. La modification locale de la microstructure de l'acier engendre une diminution locale de sa résistance mécanique. Le document US2017044637 décrit un tel traitement thermique dans le cadre de l'assemblage par rivetage de deux tôles. Le procédé mis en œuvre comprend une étape de traitement thermique avec un chauffage de la zone destinée à montrer une résistance mécanique réduite de l'acier à une température inférieure à la température Ac3 de la tôle d'acier et supérieure à la température Ac1 ou jusqu'à la température Ac1 moins 20°C de ladite tôle d'acier. La mise en œuvre d'un tel traitement thermique permet, par exemple, de passer d'une résistance à la traction d'au moins 1200 MPa à moins de 750 MPa, sans affecter la résistance à la traction du reste de la tôle, en dehors des zones douces. La bande de tôle montrant une zone douce peut être confinée au bord tombé.

La réalisation d'au moins une zone fusible au niveau du bord tombé de l'arche de roue correspond à une mise en œuvre préférée de l'invention, néanmoins d'autres emplacements peuvent être envisagés. Ainsi, l'homme du métier pourra prévoir des zones fusibles disposées sur le bord tombé du bord supérieur de l'aile tel que pris à la verticale de l'arche de roue, ou s'étendant au-delà du bord tombé de l'arche de roue ou du bord supérieur de l'aile.

Que la bande de tôle formant une zone fusible montre une épaisseur réduite et/ou ait été traitée thermiquement, l'aile montrant un bord supérieur 9, l'homme du métier aura avantage à ce que la bande de tôle formant une zone fusible s'étend entre le bord supérieur 9 de l'aile 1 et le bord formant l'arche de roue 3 et selon une direction verticale ou selon une direction montrant un angle avec la verticale égal ou inférieur à 45°. De préférence, la bande de tôle formant la zone fusible est arrangée verticalement et rejoint le bord supérieur 9 de l'aile 1 avec le point haut de l'arche de roue 3.

Il est possible de combiner les modes de réalisation des zones fusibles. Par exemple, il est possible de réaliser une entaille sur le bord tombé de l'arche de roue au niveau où une bande de tôle montrant une résistance mécanique réduite rejoint ladite arche de roue.

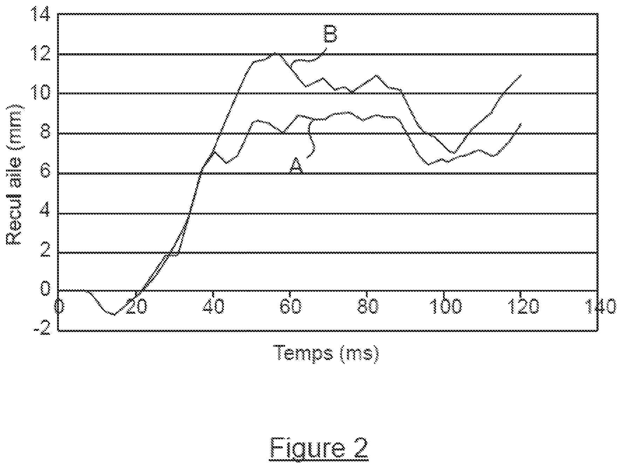

La figure 2 illustre les résultats de tests comparatifs réalisés dans le cadre de l'invention. Le graphique montre le recul dynamique maximal tel que mesuré au niveau du milieu du bord arrière d'une aile lors d'un choc à faible vitesse. La courbe A représente le recul d'une aile montrant une zone fusible 7 formée par une entaille disposée sur le bord tombé de l'arche de roue de ladite aile en son point haut. La courbe B représente le recul d'une aile selon l'art antérieur, c'est-à-dire dépourvue de zone fusible. On constate que le recul est nettement inférieur dans le cas de l'aile selon l'invention.

## Revendications

1. Aile (1) pour véhicule automobile, ladite aile (1) montrant un bord supérieur (9) et une arche de roue (3) délimitée par un bord tombé (5), l'aile (1) comprend au moins une zone fusible (7) montrant une résistance mécanique réduite par rapport au reste de l'aile (1), au moins une zone fusible (7) étant agencée au niveau de l'arche de roue (3) et/ou au niveau du bord supérieur (9) dans sa portion disposée à la verticale de l'arche de roue (3), l'aile (1) étant formée par une tôle, l'aile (1) est **caractérisée en ce que** là ou au moins une zone fusible (7) est formée par une bande de tôle montrant une épaisseur réduite par rapport à l'épaisseur du reste de la tôle formant l'aile (1) et/ou par une bande de tôle traitée thermiquement de sorte à montrer une résistance mécanique réduite par rapport à la résistance mécanique montrée par le reste de la tôle formant l'aile (1).

2. Aile (1) selon la revendication 1, **caractérisée en ce que** là ou au moins une zone fusible (7) est agencée sur le bord tombé (5) de l'arche de roue (3) ; de préférence, là ou au moins une zone fusible comprend au moins une entaille réalisée dans le bord tombé (5) de l'arche de roue (3).

3. Aile (1) selon la revendication 2, là ou au moins une zone fusible se comprenant au moins une entaille réalisée dans le bord tombé de l'arche de roue ; l'aile (1) est **caractérisée en ce qu'**elle comprend une seule entaille formant une zone fusible (7) sur son bord tombé (5) et/ou **en ce que** là ou au moins une entaille est disposée au point haut de ladite arche de roue (3).

4. Aile (1) selon l'une quelconque des revendications précédentes, l'aile (1) montrant un bord supérieur (9), l'aile (1) est **caractérisée en ce que** la bande de tôle formant une zone fusible s'étend entre le bord supérieur (9) de l'aile (1) et le bord tombé (5) de l'arche de roue (3) selon une direction verticale ou selon une direction montrant un angle avec la verticale égal ou inférieur à 45°.

5. Aile (1) selon l'une quelconque des revendications précédentes, l'aile (1) montrant un bord supérieur (9), l'aile (1) est **caractérisée en ce que** la bande de tôle formant une zone fusible s'étend entre le bord supérieur (9) de l'aile (1) et le bord tombé (5) de l'arche de roue (3) et **en ce que** ladite bande s'étend depuis le point haut de l'arche de roue (3) et/ou **en ce que** la bande de tôle formant une zone fusible montre en outre une entaille au niveau du bord tombé (5) de l'arche de roue (3).

6. Véhicule automobile **caractérisé en ce qu'**il comprend au moins une aile (1) selon l'une des revendications 1 à 5 ; de préférence, ladite aile (1) est une aile avant.

7. Procédé de fabrication d'une aile (1) selon l'une des revendications 1 à 3 ou 5 **caractérisé en ce qu'**il comprend une étape de découpage d'au moins une entaille dans l'arche de roue (3) suivie de la réalisation d'un bord tombé (5) sur l'arche de roue (3), ladite ou lesdites entailles étant dimensionnées pour être confinées audit bord tombé (5).

8. Procédé de fabrication d'une aile (1) selon l'une des revendications 1 à 5, à partir d'une tôle, l'aile (1) montrant au moins une bande de tôle d'épaisseur réduite, le procédé étant **caractérisé en ce qu'**il comprend une étape de laminage flexible de ladite tôle de manière à former au moins une bande montrant une sous-épaisseur ; de préférence, ladite étape de laminage flexible est suivie d'une étape d'emboutissage et de découpage de la tôle de manière à former ladite aile (1).

9. Procédé de fabrication d'une aile (1) selon l'une des revendications 1 à 5, à partir d'une tôle, l'aile (1) montrant au moins une bande de tôle traitée thermiquement de sorte à montrer une résistance mécanique réduite, ladite tôle étant en acier, le procédé étant **caractérisé en ce qu'**il comprend une étape de traitement thermique localisé apte à créer une zone douce montrant une résistance mécanique réduite dans laquelle la bande de tôle est chauffée à une température comprise entre les Ac1 et Ac3 de la tôle d'acier; de préférence, ladite étape de traitement thermique est suivie d'une étape d'emboutissage et de découpage de la tôle de manière à former ladite aile (1).

## Patentansprüche

1. Kfz-Kotflügel (1), wobei der Kotflügel (1) eine Oberkante (9) und eine von einer Fallkante (5) begrenzte Radböge (3) aufweist, wobei der Kotflügel (1) mindestens eine schmelzbare Zone (7) aufweist, die eine geringere mechanische Festigkeit gegenüber dem Rest des Kotflügels (1) aufweist, wobei mindestens eine schmelzbare Zone (7) an der Radböge (3) und/oder an der Oberkante (9) in ihrem vertikal zur Radböge (3) angeordneten Abschnitt angeordnet ist, wobei der Kotflügel (1) gebildet ist Der Schenkel (1) ist **dadurch gekennzeichnet, dass** der oder die wenigstens eine Schmelzzone (7) durch einen Blechstreifen mit einer gegenüber der Dicke des übrigen Schenkelblechs (1) verringerten Dicke und/oder durch einen derart wärmebehandelten Blechstreifen gebildet ist, dass eine gegenüber der mechanischen Festigkeit des übrigen Schenkelblechs (1) verringerte mechanische Festigkeit vorliegt.

2. Flügel (1) nach Patentanspruch 1, **dadurch gekennzeichnet, dass** dort oder an dem wenigstens einen Schmelzbereich (7) am Fallrand (5) des Radbogens (3) angeordnet ist; vorzugsweise dort oder an dem wenigstens einen Schmelzbereich wenigstens eine Kerbe im Fallrand (5) des Radbogens (3) ausgebildet ist.

3. Flügel (1) nach Anspruch 2, wobei der oder der wenigstens eine schmelzbare Bereich wenigstens eine Kerbe umfasst, die in der abfallenden Kante des Radbogens ausgebildet ist; der Flügel (1) **dadurch gekennzeichnet, dass** er eine einzige Kerbe umfasst, die an seiner abfallenden Kante (5) einen schmelzbaren Bereich (7) bildet, und/oder dass dort oder wenigstens eine Kerbe an der Oberseite des Radbogens (3) angeordnet ist.

4. Flügel (1) nach einem der vorhergehenden Ansprüche, wobei der Flügel (1) einen oberen Rand (9) aufweist, wobei der Flügel (1) **dadurch gekennzeichnet ist, dass** sich der Blechstreifen, der einen schmelzbaren Bereich bildet, zwischen dem oberen Rand (9) des Flügels (1) und dem abfallenden Rand (5) des Radbogens (3) in einer vertikalen Richtung oder in einer Richtung erstreckt, die einen Winkel mit der Vertikalen von 45° oder weniger aufweist.

5. Flügel (1) nach einem der vorhergehenden Ansprüche, wobei der Flügel (1) einen oberen Rand (9) aufweist, wobei der Flügel (1) **dadurch gekennzeichnet ist, dass** sich der Blechstreifen, der einen schmelzbaren Bereich bildet, zwischen dem oberen Rand (9) des Flügels (1) und dem abfallenden Rand (5) des Radbogens (3) erstreckt, und dass sich der Streifen von dem oberen Punkt des Radbogens (3) erstreckt und/oder dass der Blechstreifen, der einen schmelzbaren Bereich bildet, außerdem einen Einschnitt an dem abfallenden Rand aufweist (5) des Radbogens (3).

6. Kraftfahrzeug, **dadurch gekennzeichnet, dass** es mindestens einen Flügel (1) nach einem der Ansprüche 1 bis 5 umfasst; vorzugsweise ist der Flügel (1) ein vorderer Flügel.

7. Verfahren zur Herstellung eines Flügels (1) nach einem der Ansprüche 1 bis 3 oder 5, **dadurch gekennzeichnet, dass** es einen Schritt des Schneidens mindestens einer Kerbe in der Radarkante (3) umfasst, gefolgt von der Herstellung einer abfallenden Kante (5) auf der Radarkante (3), wobei die Kerbe oder die Kerben so bemessen sind, dass sie auf die abfallende Kante (5) beschränkt sind.

8. Verfahren zur Herstellung eines Flügels (1) nach einem der Ansprüche 1 bis 5 aus einem Blech, wobei der Flügel (1) mindestens ein Blechband mit verringerter Dicke zeigt, wobei das Verfahren **dadurch gekennzeichnet ist, dass** es einen Schritt des flexiblen Walzens des Blechs umfasst, um mindestens ein Band zu bilden, das eine Unterdicke zeigt; vorzugsweise folgt auf den Schritt des flexiblen Walzens ein Schritt des Tiefziehens und Schneidens des Blechs, um den Flügel (1) zu bilden.

9. Verfahren zur Herstellung eines Flügels (1) nach einem der Ansprüche 1 bis 5 aus einem Blech, wobei der Flügel (1) mindestens ein wärmebehandeltes Blechband zeigt, um eine verringerte mechanische Festigkeit zu zeigen, wobei das Blech aus Stahl besteht, wobei das Verfahren **dadurch gekennzeichnet ist, dass** es einen lokalisierten Wärmebehandlungsschritt umfasst, der geeignet ist, eine weiche Zone zu erzeugen, die eine verringerte mechanische Festigkeit zeigt, in der das Blechband auf eine Temperatur zwischen Ac1 und Ac3 des Stahlblechs erhitzt wird; vorzugsweise folgt dem Wärmebehandlungsschritt ein Schritt zum Ziehen und Schneiden des Blechs zur Bildung des Schenkels (1).

## Claims

1. Motor vehicle wing (1), said wing (1) showing an upper edge (9) and a wheel arch (3) delimited by a flanged edge (5), the wing (1) comprises at least one fusible zone (7) showing reduced mechanical strength by report with the remainder of the wing (1), at least one fusible zone (7) being arranged on the level of the wheel arch (3) and/or on the level of the upper edge (9) in its portion arranged vertically above the wheel arch (3), the wing (1) being formed by a On the sheet metal, the flange (1) is **characterised in that** where at least one fusible zone (7) is formed by a sheet metal strip showing a reduced thickness by report with the thickness of the remainder of the sheet metal forming the flange (1) and/or by a sheet metal strip heat-treated so as to show a reduced mechanical strength by report with the mechanical strength shown by the remainder of the sheet metal forming the flange (1).

2. Wing (1) according to Claim 1, **characterised in that** there or at least one fusible zone (7) is arranged on the flanged edge (5) of the wheel arch (3); preferably, there or at least one fusible zone comprises at least one realised notch in the flanged edge (5) of the wheel arch (3).

3. Wing (1) according to Claim 2, where at least one fusible zone comprises at least one realised notch in the flanged edge of the wheel arch; the wing (1) is **characterised in that** it comprises a single notch forming a fusible zone (7) on its flanged edge (5) and/or **in that** where at least one notch is arranged at the high point of said wheel arch (3).

4. Wing (1) according to any one of the previous claims, the wing (1) showing an upper edge (9), the wing (1) being **characterised in that** the strip of sheet metal forming a fusible zone extends between the upper edge (9) of the wing (1) and the flanged edge (5) of the wheel arch (3) according to a vertical management or according to a management showing an angle with the vertical equal to or less than 45°.

5. Wing (1) according to any one of the previous claims, the wing (1) showing an upper edge (9), the wing (1) being **characterised in that** the sheet metal strip forming a fusible zone extends between the upper edge (9) of the wing (1) and the flanged edge (5) of the wheel arch (3) and **in that** the said strip extends from the top point of the wheel arch (3) and/or **in that** the sheet metal strip forming a fusible zone also shows a notch on the level of the flanged edge (5) of the wheel arch (3).

6. Motor vehicle, **characterised in that** it comprises at least one wing (1) according to one of Claims 1 to 5; preferably, the said wing (1) is a front wing.

7. Process for manufacturing a wing (1) according to one of Claims 1 to 3 or 5, **characterised in that** it comprises a step of cutting at least one notch in the wheel arch (3) followed by the production of a flanged edge (5) on the wheel arch (3), the said notch or notches being dimensioned to be confined to the said flanged edge (5).

8. Process for manufacturing a wing (1) according to one of Claims 1 to 5, from a sheet, the wing (1) showing at least one strip of sheet of reduced thickness, the process being **characterised in that** it comprises a step of flexible rolling of the said sheet so as to form at least one strip showing a sub-thickness; preferably, the said step of flexible rolling is followed by a step of stamping and cutting of the sheet so as to form the said wing (1).

9. Process for manufacturing a wing (1) according to one of Claims 1 to 5, from a sheet, the wing (1) showing at least one strip of sheet metal heat-treated so as to show reduced mechanical strength, the said sheet metal being made of steel, the process being **characterised in that** it comprises a localised heat treatment step capable of producing a soft zone showing reduced mechanical strength in which the strip of sheet metal is heated to a temperature comprised between the Ac1 and Ac3 of the sheet metal; preferably, the said heat treatment step is followed by a stamping and heating step cutting the sheep so as to form said flange (1).
